# EUROPEAN PATENT SPECIFICATION

(11) **EP 4 379 850 B1**
(45) Date of publication and mention of the grant of the patent: **02.12.2026**
(21) Application number: 23812216.2
(22) Date of filing: 26.05.2023
(51) Int. Cl.: H01M 4/133, H01M 4/02, H01M 4/62, H01M 4/134, H01M 10/0525, H01M 10/0569

(54) **LITHIUM SECONDARY BATTERY**
LITHIUMSEKUNDÄRBATTERIE
BATTERIE SECONDAIRE AU LITHIUM

(30) Priority: 27.05.2022 KR 20220065484
(43) Date of publication of application: 05.06.2024
(73) Proprietor: LG Energy Solution, Ltd., Seoul 07335 (KR)
(72) Inventor: KOO, Chang Wan, Daejeon 34122 (KR); PARK, Min A, Daejeon 34122 (KR); CHUNG, Kyung Sil, Daejeon 34122 (KR); YEO, Chang Hun, Daejeon 34122 (KR)
(74) Representative: Plasseraud IP
(86) International application number: PCT/KR2023/007322
(87) International publication number: WO 2023/229442

(56) References cited:
- JP-A- 2014 022 039
- JP-A- H10 154 513
- KR-A- 20050 041 859
- KR-A- 20140 005 079
- KR-A- 20170 103 688
- KR-A- 20180 054 434
- KR-A- 20180 111 322
- KR-B1- 101 623 637

## Description

### [Technical Field]

This application claims the benefit of priority based on Korean Patent Application No. 10-2022-0065484, filed on May 27, 2022.

The present invention relates to a lithium secondary battery, and more specifically, to a lithium secondary battery which includes a negative electrode having excellent adhesive performance and has an improved capacity retention rate and an improved resistance increase rate.

### [Background Art]

As the technology development of mobile devices and the demand for mobile devices increase, the demand for secondary batteries as a power source is rapidly increasing. Among secondary batteries, lithium secondary batteries having a high energy density, a high voltage, a long cycle lifespan, and a low self-discharge rate have been commercialized and widely used.

In typical conventional lithium secondary batteries, graphite is used as a negative electrode active material, and charging and discharging proceed by repeating a process of intercalation and deintercalation of lithium ions of a positive electrode into/from a negative electrode. Although the theoretical capacity of a battery varies depending on the type of electrode active material, charge and discharge capacity is generally degraded as the cycle proceeds.

This phenomenon is caused by an active material not performing its function due to separation between electrode active materials or between an electrode active material and a current collector due to a change in electrode volume, which occurs as a battery charges and discharges. This phenomenon is also caused by repetitive production and consumption of a solid electrolyte interface (SEI) film of a negative electrode due to side-reacting chemicals as charging and discharging are repeated.

Therefore, there is a need for research on a binder and an electrode material that are capable of enhancing the structural stability of an electrode and thereby improving the performance of the battery by preventing separation between electrode active materials or between an electrode active material and a current collector using high adhesion during manufacture of an electrode and controlling the volume expansion of an electrode active material, which occurs upon repetitive charging and discharging.

Since polyvinylidene fluoride (PVDF), which is a conventional organic solvent-based binder, does not meet the above requirements, recently, an aqueous binder such as carboxymethylcellulose (CMC) or styrene-butadiene rubber (SBR) has been commonly used. CMC is used as a thickener in an electrode slurry, but is known to impart adhesion in an electrode. Particularly, a CMC-Na salt is known to have excellent electrode adhesion.

However, when a conventionally used CMC-Na salt is selected as an electrode material, a satisfactory level of capacity retention rate after long-term cycling is not realized. Therefore, when designing a secondary battery, there is a need to develop technology to improve the capacity retention rate and resistance increase rate of a battery as the cycle increases by minimizing the consumption of an organic solvent required to form an SEI film.

JP H10 154513 A relates to a non-aqueous electrolyte battery and JP 2014 022039 A relates to a negative electrode binder for lithium secondary batteries.

### [Disclosure]

### [Technical Problem]

The present invention has been made to solve the above-described problems of the related art and is directed to providing a lithium secondary battery having an improved capacity retention rate and excellent resistance characteristics after long-term cycling.

### [Technical Solution]

The invention is defined by attached claim 1. It includes: a positive electrode; a negative electrode; a separator, and an electrolyte, wherein the negative electrode includes a negative electrode current collector and a negative electrode active material layer formed on at least one surface of the negative electrode current collector, the negative electrode active material layer includes a negative electrode active material, an aqueous binder, and a lithium carboxymethyl cellulose salt (CMC-Li salt), the electrolyte includes a lithium salt and an organic solvent, and the organic solvent includes diethyl carbonate.

In an embodiment of the present invention, the organic solvent may include diethyl carbonate in an amount of 10 vol% or more based on a total volume of the organic solvent.

In an embodiment of the present invention, the organic solvent may further include one or two or more organic solvents selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate (VC), fluoroethylene carbonate (FEC), dimethyl carbonate (DMC), dipropyl carbonate, ethyl methyl carbonate (EMC), methyl propyl carbonate, ethyl propyl carbonate, dimethyl ether, diethyl ether, dipropyl ether, methyl ethyl ether, methyl propyl ether, ethyl propyl ether, methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone.

In an embodiment of the present invention, the organic solvent may further include one or two or more selected from the group consisting of ethylene carbonate (EC), ethyl methyl carbonate (EMC), and dimethyl carbonate (DMC).

According to the present invention, the CMC-Li salt has 100 or less microgels per unit area (5 cm×5 cm) of a thin film coated with a 1 wt% aqueous solution to a thickness of 200 µm.

In an embodiment of the present invention, the microgel may have a diameter of 200 µm or less.

In an embodiment of the present invention, the CMC-Li salt may have a degree of substitution of a hydroxy group (-OH) with a lithium carboxymethyl group (-CH₂COOLi)of 0.7 to 1.3.

In an embodiment of the present invention, the CMC-Li salt may have a weight-average molecular weight (Mw) of 400,000 to 1,500,000.

In an embodiment of the present invention, the CMC-Li salt may have a weight-based solubility of 1.0 to 1.7 as measured at 23 °C.

In an embodiment of the present invention, the CMC-Li salt may be included in an amount of 10 wt% or less based on a total weight of the negative electrode active material layer.

In an embodiment of the present invention, the aqueous binder may be styrene-butadiene rubber (SBR).

In an embodiment of the present invention, the SBR may have a particle diameter of 90 nm to 500 nm.

In an embodiment of the present invention, the negative electrode active material may include one or more carbon-based materials selected from the group consisting of graphite-based carbon, coke-based carbon, and hard carbon.

In an embodiment of the present invention, the negative electrode active material may further include one or more silicon-based materials selected from the group consisting of Si, SiOx (0<x≤2), and an Si-Y alloy (where Y is an element selected from the group consisting of an alkali metal, an alkaline earth metal, a Group 13 element, a Group 14 element, a transition metal, a rare earth element, and a combination thereof and is not Si).

In an embodiment of the present invention, the silicon-based material may be included in an amount of 0.1 to 10 parts by weight based on a total weight of the negative electrode active material.

### [Advantageous Effects]

In the case of a lithium secondary battery according to the present invention, as a CMC-Li salt included in a negative electrode supplements lithium constituting an SEI film during formation of the battery, consumption of a lithium salt of an electrolyte and an organic solvent required to form an SEI film is minimized, and thus lifespan characteristics and a resistance increase rate can be improved.

In addition, the diethyl carbonate component included as an organic solvent of an electrolyte can double the above effect.

Additionally, since the lithium secondary battery according to the present invention includes a CMC-Li salt having a small number of microgels, generation of a pinhole in a negative electrode can be suppressed, and negative electrode adhesion can be enhanced.

### [Detailed Description of the Preferred Embodiments]

Hereinafter, exemplary embodiments of the present invention will be described in detail. Terms and words used in this specification and the claims should not be interpreted as being limited to commonly used meanings or meanings in dictionaries and should be interpreted with meanings and concepts which are consistent with the technical scope of the present invention based on the principle that the inventors can appropriately define concepts of terms in order to describe the invention in the best way.

Therefore, since the embodiments described in this specification and configurations illustrated in drawings are only exemplary embodiments and do not represent the overall technical scope of the present invention, it is understood that the invention covers various equivalents, modifications, and substitutions at the time of filing this application.

Terms used herein are for describing the exemplary embodiments and are not intended to limit the present invention. In this specification, the singular form may include the plural form unless specifically stated otherwise in the context. As used herein, the terms/term "comprises" and/or "comprising" do/does not preclude the presence or addition of one or more other components in addition to the stated components.

In this specification, D₅₀refers to a particle diameter corresponding to a cumulative volume of 50% in the particle diameter distribution curve. The D₅₀ may be measured, for example, by a laser diffraction method. The laser diffraction method generally enables measurement of a particle diameter ranging from submicrons to several mm and may obtain a result with high reproducibility and high resolution.

In this specification, a "specific surface area" is measured by a BET method and may be specifically calculated from the amount of nitrogen gas adsorbed at a liquid nitrogen temperature (77 K) using BELSORP-mini II commercially available from BEL Japan.

In this specification a "weight-average molecular weight (Mw)" refers to a conversion value with respect to standard polystyrene measured through gel permeation chromatography (GPC). Specifically, the weight-average molecular weight is a value obtained by converting a value measured under the following conditions using GPC, and standard polystyrene of an Agilent system is used to make a calibration curve.

### <Measurement conditions>

Analyzer: Agilent GPC (Agilent 1200 series, US)
Column: two connected PL Mixed B columns
Column temperature: 40 °C
Eluent: Tetrahydrofuran
Flow rate: 1.0 mL/min
Concentration: ~ 1 mg/mL (100 µL injection)

The present invention provides a lithium secondary battery.

As a result of conducting intensive research and various experiments, the inventors of the present application have found that, as described below, when a CMC-Li salt is included as a binder or thickener in a negative electrode and diethyl carbonate is included as an essential component of an organic solvent of an electrolyte, the capacity retention rate of a secondary battery can increase, and the resistance increase rate can also decrease, and thereby completed the present invention based on this finding.

Accordingly, a lithium secondary battery according to an embodiment of the present invention includes: a positive electrode; a negative electrode; a separator, and an electrolyte, wherein the negative electrode includes a negative electrode current collector and a negative electrode active material layer formed on at least one surface of the negative electrode current collector, the negative electrode active material layer includes a negative electrode active material, an aqueous binder, and a lithium carboxymethyl cellulose salt (CMC-Li salt), the electrolyte includes a lithium salt and an organic solvent, and the organic solvent includes diethyl carbonate.

Hereinafter, the lithium secondary battery of the present invention will be described in detail.

### Negative electrode

The negative electrode according to an embodiment of the present invention includes a negative electrode active material layer on at least one surface of a negative electrode current collector, and the negative electrode active material layer may be formed by applying a negative electrode slurry including a negative electrode active material, an aqueous binder, a lithium carboxymethyl cellulose salt (CMC-Li salt), and a solvent onto a negative electrode current collector, followed by drying and rolling. The solvent may be an aqueous solvent such as water.

First, the CMC-Li salt will be described.

Conventionally, since a CMC-Na salt including a sodium carboxymethyl group (-CH₂COONa) is known to have excellent adhesion, the CMC-Na salt is commonly used as a binder or thickener of a negative electrode. Although the CMC-Na salt has an effect of enhancing the overall performance of a secondary battery, the effect is not satisfactory in terms of lifespan characteristics and resistance characteristics.

The negative electrode according to the present invention uses a CMC-Li salt instead of a CMC-Na salt, and the CMC-Li salt is capable of supplementing a lithium component constituting an SEI film to minimize the consumption of a lithium salt and organic solvent required to form an SEI film. As a result, the capacity retention rate of a secondary battery after long-term cycling can increase, and the resistance increase rate can decrease. Also, this effect is doubled when diethyl carbonate is included as an organic solvent of an electrolyte.

According to the present invention, the CMC-Li salt has 100 or less microgels, preferably 90 or less microgels, and more preferably 80 or less microgels per unit area (5 cm×5 cm) of a thin film coated with a 1 wt% aqueous solution to a thickness of 200 µm.

The number of microgels is measured by adding the CMC-Li salt at a concentration of 1 wt% to deionized water, applying the resulting CMC-Li salt solution to a thickness of 200 µm onto a slide glass, and measuring the number of visually observable microgels (undissolved materials) per unit area (5 cm×5 cm). In this case, the visually observable microgels are specifically microgels having a diameter of 200 µm or less.

A conventional CMC-Na salt has more than 100 microgels as measured under the same conditions, and the larger the number of microgels, the lower the negative electrode adhesion.

In an embodiment of the present invention, the CMC-Li salt may be prepared by adding LiOH and mono-chloro acetic acid (MCA) to cellulose (single-step process) or by adding a CMC-Na salt to a mixed solution of ethanol and HCl, stirring and allowing to react to prepare H-CMC, and reacting the H-CMC and LiOH to prepare a CMC-Li salt(multi-step process). The CMC-Li salt prepared by the latter multi-step process has advantages such as high purity, a high adhesion enhancement effect, and a small number of microgels in the dispersion, as compared to the CMC-Li salt prepared by the former single-step process. Particularly, the CMC-Li salt prepared by the latter multi-step process is more preferred as the CMC-Li salt of the present invention due to having 70 or less microgels, and more specifically, 60 or less microgels as measured under the above-described conditions.

As the number of microgels measured by the above-described method is smaller in the CMC-Li salt, agglomeration of a negative electrode active material or a conductive material is prevented in the manufacture of a negative electrode, and thus the generation of a pinhole in the prepared negative electrode active material layer can be suppressed. Accordingly, degradation of battery performance due to pinhole generation can be suppressed.

In an embodiment of the present invention, the CMC-Li salt may have a degree of substitution of a hydroxy group (-OH) with a lithium carboxymethyl group (-CH₂COOLi) of 0.7 to 1.3, and preferably, 0.8 to 1.2.

In an embodiment of the present invention, the CMC-Li salt may have a weight-average molecular weight (Mw) of 400,000 to 1,500,000, preferably 450,000 to 1,350,000, and more preferably 500,000 to 1,200,000.

In an embodiment of the present invention, the CMC-Li salt may have a weight-based solubility of 1.0 to 1.7, preferably 1.1 to 1.6, and more preferably 1.2 to 1.5 as measured at 23 °C. The solubility may be a percentage of the weight of the CMC-Li salt relative to the total weight of deionized water and the CMC-Li salt.

When a CMC-Li salt satisfying all of the above-described substitution degree, weight-average molecular weight, and solubility ranges is used, the CMC-Li salt does not agglomerate and is uniformly dispersed in the negative electrode to enhance adhesion in the negative electrode, and the overall performance of a secondary battery, such as capacity and lifespan characteristics, can be significantly improved.

In an embodiment of the present invention, the CMC-Li salt may have a pH of 6.5 to 8.0, preferably 6.7 to 7.9, and more preferably 6.9 to 7.85.

The CMC-Li salt may have a viscosity of 2,000 cps to 12,000 cps as measured at 23 °C and 12 rpm using a type B LV viscometer.

The CMC-Li salt may be included in an amount of 10 wt% or less, preferably 0.3 to 5 wt%, and more preferably 0.5 to 1.5 wt% based on the total weight of the negative electrode active material layer. When the CMC-Li salt is included in the above amount, quick charging characteristics and energy density can be excellent.

The aqueous binder may be styrene-butadiene rubber (SBR). Since SBR as the aqueous binder may be dispersed in the form of an emulsion in water, the use of an organic solvent is not required, and a negative electrode active material content is increased while a binder content is reduced due to high adhesion, and thus it is favorable for realizing the high capacity of a lithium secondary battery. Particularly, when the CMC-Li salt is used with SBR, a ratio of the negative electrode active material per the same volume of the negative electrode active material layer is further increased. Therefore, high capacity can be realized, electrode processability can be enhanced due to an increase in solid content of a negative electrode slurry, and a swelling phenomenoncan be improved.

When SBR having a predetermined range of particle diameter is used when the CMC-Li salt is used as a thickener, the performance of a secondary battery can be further enhanced. In a specific example, the SBR may have a particle diameter of 90 nm to 500 nm, and specifically, 100 nm to 400 nm.

In an embodiment of the present invention, the CMC-Li salt and the aqueous binder may be included in an amount of 1 to 30 wt% based on the total weight of the negative electrode active material layer.

In addition, in a specific example, a content ratio of the CMC-Li salt and the aqueous binder may be 1:5 to 2:1, specifically 1:3 to 3:2, and more specifically 2:3 to 1:1 based on weight.

As the negative electrode active material, any negative electrode active material that is commonly used in a lithium secondary battery may be used without limitation. For example, a carbon-based material such as non-graphitizable carbon, graphite-based carbon or the like; a metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, Group 2, and Group 3 elements of the periodic table, halogens; 0<x≤1; 1≤y≤3; 1≤z≤8) or the like; lithium metal; a lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅ or the like; a conductive polymer such as polyacetylene or the like; or a Li-Co-Ni-based material may be used.

However, not all negative electrode active materials have the same effect, and among the above-listed negative electrode active materials, those containing a carbon-based material may exhibit the best effect. Specifically, as the carbon-based material, both low-crystallinity carbon and high-crystallinity carbon may be used. As high-crystallinity carbon, natural graphite, artificial graphite, Kish graphite, pyrolytic carbon, mesophase pitch-based carbon fiber, meso-carbon microbeads, mesophase pitches, or calcined carbon such as petroleum or coal tar pitch-derived cokes may be used, and specifically, a graphite-based negative electrode active material such as natural graphite or artificial graphite is more preferred because it allows reversible intercalation and deintercalation of lithium ions while maintaining structural and electrical properties.

The natural graphite may have a specific surface area of 1.5 m²/g to 8 m²/g, specifically 2.1 m²/g to 4.5 m²/g, and more specifically 2.5 m²/g to 4 m²/g. When the natural graphite has a specific surface area within the above range, adhesion can be imparted to a negative electrode due to a certain level or more of specific surface area, and an excessive increase in initial irreversible capacity during charging and discharging due to the specific surface area can be prevented.

In addition, the natural graphite may have a tap density of 0.9 g/cc to 1.3 g/cc, specifically 0.92 g/cc to 1.2 g/cc, and more specifically 0.95 g/cc to 1.15 g/cc. When the natural graphite has a tap density within the above range, appropriate negative electrode adhesion and excellent energy density can be realized.

In an embodiment of the present invention, the artificial graphite may have a specific surface area of 0.4 m²/g to 5.0 m²/g, specifically 0.5 m²/g to 4.0 m²/g, and more specifically 0.6 m²/g to 3.0 m²/g. When the artificial graphite has a specific surface area within the above range, an increase in initial irreversible capacity during charging and discharging can be prevented.

In addition, the artificial graphite may have a tap density of 0.7 g/cc to 1.1 g/cc, specifically 0.75 g/cc to 1.05 g/cc, and more specifically 0.8 g/cc to 1.0 g/cc. When the artificial graphite has a tap density within the above range, the negative electrode active material can have excellent energy density.

In an embodiment of the present invention, the graphite-based negative electrode active material may have a sphericity of 0.8 or more, preferably 0.85 to 1, and more preferably 0.9 to 1.

As the sphericity of the graphite-based negative electrode active material increases, a binder is appropriately attached the surface of the negative electrode active material and smoothly dispersed without agglomeration, and thus the adhesion of the entire negative electrode can be enhanced.

The sphericity may be a value obtained by dividing the circumference of a circle with the same area as the image in which the graphite-based negative electrode active material is projected by the circumference of the projected image, and may be specifically represented by the following Equation 1. The sphericity may be measured using a particle image analyzer, for example, a particle image analyzer such as Sysmex FPIA3000 commercially available from Malvern Analytical Ltd. 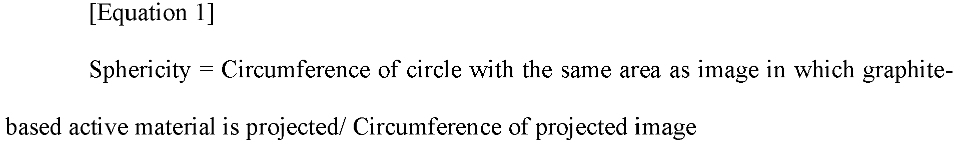 [Equation 1] Sphericity = Circumference of circle with the same area as image in which graphite-based active material is projected/ Circumference of projected image

In an exemplary embodiment, a silicon-based material may be further included as the negative electrode active material in addition to the carbon-based material. The silicon-based material is one or more selected from the group consisting of Si, SiOx (0<x≤2), an Si-Y alloy (where Y is an element selected from the group consisting of an alkali metal, an alkaline earth metal, a Group 13 element, a Group 14 element, a transition metal, a rare earth element, and a combination thereof and is not Si), and the element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The silicon-based material may be included in an amount of 0.1 to 10 parts by weight, preferably 0.5 to 8 parts by weight, and more preferably 1 part by weight to 6 parts by weight based on the total weight of the negative electrode active material.

The silicon-based material particles may have an average particle diameter (D₅₀) of 1 µm to 30 µm, specifically 3 µm to 20 µm, and more specifically 4 µm to 10 µm. When the average particle diameter (D₅₀) of the silicon-based material particles is excessively small, a side reaction with an electrolyte may increase, and lifespan performance may be degraded. On the other hand, when the D₅₀ of the silicon-based material particles is excessively large, particles may be cracked due to high volume expansion during charging and discharging, and thus lifespan performance may be degraded. Therefore, when the D₅₀ of the silicon-based material particles satisfies the above range, a side reaction with an electrolyte and the volume expansion of silicon-based material particles can be maintained at appropriate levels, and thus a battery including the same can exhibit excellent lifespan characteristics.

Meanwhile, the negative electrode active material layer may optionally further include a conductive material and/or a filler and other additives in addition to the CMC-Li salt, the aqueous binder, and the negative electrode active material.

The conductive material is not particularly limited as long as it does not cause a chemical change in the battery and has conductivity. For example, graphite such as natural graphite, artificial graphite and the like; a carbon-based material such as carbon black, acetylene black, Ketjen black, channel black, furnace black, lamp black, thermal black and the like; a conductive fiber such as a carbon fiber, a metal fiber and the like; a conductive tube such as carbon nanotubes and the like; a metal powder such as fluorocarbon powder, aluminum powder, nickel powder and the like; a conductive whisker such as zinc oxide, potassium titanate and the like; a conductive metal oxide such as titanium oxide and the like; or a conductive material such as a polyphenylene derivative and the like may be used.

The conductive material may be typically included in an amount of 1 to 30 wt% based on the total weight of the negative electrode active material layer.

The filler is optionally used as a component that suppresses an electrode from expanding and is not particularly limited as long as it does not cause a chemical change in the battery and is a fibrous material. For example, an olefin-based polymer such as polyethylene, polypropylene and the like; or a fibrous material such as glass fiber, carbon fiber and the like may be used.

The negative electrode current collector is a metal that has high conductivity and allows an electrode slurry including a negative electrode active material to easily adhere thereto, and any current collector may be used as long as it has no reactivity in a voltage range of a battery. Specifically, copper, stainless steel, aluminum, nickel, titanium, calcined carbon, stainless steel whose surface has been treated with carbon, nickel, titanium, silver, or the like, an aluminum-cadmium alloy, a non-conductive polymer whose surface has been treated with a conductive material, or a conductive polymer may be used. Also, the negative electrode current collector may have fine irregularities formed on the surface thereof to increase the adhesion of a negative electrode active material, and may be used in any of various forms such as a film, a sheet, a foil, a net, a porous material, a foam, a non-woven fabric, and the like.

In the present invention, the thickness of the negative electrode current collector may be the same within the range of 3 to 200 µm, but in some cases, may be different.

In the negative electrode of the present invention, in which the negative electrode active material layer is formed on the negative electrode current collector, the loading amount of the negative electrode active material layer may be 10 to 20 mg/cm², and specifically, 14 to 16 mg/cm². In the case of a conventional negative electrode mixture including a CMC-Na salt, the maximum loading amount capable of obtaining an industrially available level of charging characteristics is 13 mg/cm² or less, whereas the negative electrode of the present invention, including a CMC-Li salt, exhibits an excellent capacity retention rate and excellent resistance characteristics even at a loading amount of up to 16 mg/cm².

The negative electrode active material layer may have a thickness of 200 µm or less, specifically 20 µm to 180 µm, and more specifically 30 µm to 150 µm.

### Electrolyte

In an embodiment of the present invention, the electrolyte may be a lithium salt-containing non-aqueous electrolyte, and the lithium salt-containing non-aqueous electrolyte may include a non-aqueous organic solvent and a lithium salt.

In an embodiment of the present invention, the non-aqueous organic solvent may include diethyl carbonate as an essential component.

In an exemplary embodiment of the present invention, the organic solvent may include diethyl carbonate in an amount of 10 vol% or more, preferably 15 vol% or more, and more preferably 20 vol% or more based on the total volume of the organic solvent.

In general, a lithium secondary battery is charged and discharged by repeating a process of intercalating and deintercalating lithium ions from a lithium metal oxide of a positive electrode into/from a graphite electrode of a negative electrode. In this case, lithium reacts with the carbon electrode due to having high reactivity to produce Li₂CO₃, LiO, LiOH, and the like, and thus a film is formed on the surface of the negative electrode. The formed film is referred to as a solid electrolyte interface (SEI) film, and the SEI film formed at the beginning of charging prevents a reaction between lithium ions and the carbon negative electrode or other materials during charging and discharging. Also, the SEI film serves as an ion tunnel to allow only lithium ions to pass. The ion tunnel serves to prevent the destruction of the structure of the carbon negative electrode due to the co-intercalation of the lithium ions and organic solvent, which are contained in an electrolyte, have a high molecular weight, and move along with the lithium ions by solvating the lithium ions, into the carbon negative electrode.

The lithium secondary battery of the present invention includes the CMC-Li salt in the negative electrode, and the CMC-Li salt is capable of supplementing lithium constituting the SEI film formed at the beginning of activation charging (formation) to minimize the consumption of an organic solvent required to form the SEI film. In the present invention, in order to double this effect, diethyl carbonate (DEC) may be included as a non-aqueous organic solvent, and accordingly, cycle characteristics and resistance characteristics can be further enhanced. In this case, diethyl carbonate may be included in an amount of 10 vol% or more, preferably 15 vol% or more, and more preferably 20 vol% or more based on the total volume of the organic solvent.

In addition to diethyl carbonate (DEC), the electrolyte of the present invention may further include one or two or more organic solvents selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate (VC), fluoroethylene carbonate (FEC), dimethyl carbonate (DMC), dipropyl carbonate, ethyl methyl carbonate (EMC), methyl propyl carbonate, ethyl propyl carbonate, dimethyl ether, diethyl ether, dipropyl ether, methyl ethyl ether, methyl propyl ether, ethyl propyl ether, methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone, and preferably, one or two or more selected from the group consisting of EC, EMC, and DMC.

The lithium salt is a material that is readily soluble in the non-aqueous electrolyte, and for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenyl borate, an imide, or the like may be used.

In addition, in order to improve charging/discharging characteristics, flame retardancy, and the like, for example, pyridine, triethylphosphite, triethanolamine, cyclic ether, ethylenediamine, n-glyme, hexaphosphorictriamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the electrolyte. In some cases, a halogen-containing solvent such as carbon tetrachloride, ethylene trifluoride, or the like may be further included to impart incombustibility, carbon dioxide gas may be further included to enhance high-temperature storage characteristics, and fluoroethylene carbonate (FEC), propene sultone (PRS), or the like may be further included.

In a specific example, the lithium salt-containing non-aqueous electrolyte may be prepared by adding a lithium salt such as LiPF₆, LiClO₄, LiBF₄, LiN(SO₂CF₃)₂, or the like to a mixed solvent of a cyclic carbonate such as EC or PC, which is a high-dielectric constant solvent, and a linear carbonate such as DEC, DMC, or EMC, which is a low-viscosity solvent.

### Positive electrode

In an embodiment of the present invention, the positive electrode may be manufactured by forming a positive electrode active material layer on a positive electrode current collector. The positive electrode active material layer may be formed by applying a positive electrode slurry including a positive electrode active material, a binder, a conductive material, and a solvent onto a positive electrode current collector, followed by drying and rolling.

The positive electrode current collector is not particularly limited as long as it does not cause a chemical change in the battery and has conductivity, and for example, stainless steel, aluminum, nickel, titanium, calcined carbon, or aluminum or stainless steel whose surface has been treated with carbon, nickel, titanium, silver, or the like may be used. Also, the positive electrode current collector may typically have a thickness of 3 to 500 µm and have fine irregularities formed on the surface thereof to increase the adhesion of a positive electrode active material. For example, the positive electrode current collector may be used in any of various forms such as a film, a sheet, a foil, a net, a porous material, a foam, a non-woven fabric, and the like.

The positive electrode active material is not particularly limited, and any compound that is known to be capable of reversible intercalation and deintercalation of lithium ions in the art may be used without limitation. Specifically, the positive electrode active material may include: a layered compound such as lithium cobalt oxide (LiCoO₂), lithium nickel oxide (LiNiO₂) or the like or a layered compound substituted with one or more transition metals; a lithium manganese oxide represented by the chemical formula Li₁₊ₓMn₂₋ₓO₄ (where x is 0 to 0.33) such as LiMnO₃, LiMn₂O₃, LiMnO₂ or the like; lithium copper oxide such as Li₂CuO₂; a vanadium oxide such as LiV₃O₈, LiV₃O₄, V₂O₅, Cu₂V₂O or the like; a Ni-site-type lithium nickel oxide represented by the chemical formula LiNi₁₋ₓMₓO₂ (where M = Co, Mn, Al, Cu, Fe, Mg, B or Ga, and x = 0.01 to 0.3); a lithium manganese composite oxide represented by the chemical formula LiMn₂₋ₓMₓO₂ (where M = Co, Ni, Fe, Cr, Zn or Ta, and x = 0.01 to 0.1) or Li₂Mn₃MO₈ (where M = Fe, Co, Ni, Cu or Zn); a lithium manganese composite oxide represented by LiNiₓMn₂₋ₓO₄ and having a spinel structure; LiMn₂O₄ in which some Li ions in the chemical formula have been substituted with alkaline earth metal ions; a disulfide compound; a lithium iron phosphorus oxide such as LiFePO₄; and Fe₂(MoO₄)₃, but the present invention is not limited thereto.

Since it is important to enhance energy density in the battery to which the present invention is applied, the positive electrode active material may include a Ni-rich lithium transition metal oxide represented by the following Chemical Formula 1.

Li₁₊ₓNiₐCo_{b}Mn_{c}M_{1-(a+b+c)}O_{2-y}A_{y} (Chemical Formula 1)

In Chemical Formula 1,
M is at least one selected from the group consisting of Cu, Ti, Mg, Al, Pt, and Zr,
A is an oxygen-substituted halogen,
0≤x≤0.5, 0.8≤a≤1, 0≤b≤0.2, 0≤c≤0.2, 0.9≤a+b+c≤1, and 0≤y≤0.001are satisfied.

More specifically, a may satisfy 0.88≤a<1.

In addition, active materials other than the lithium transition metal oxide represented by Chemical Formula 1 may be mixed and used.

The positive electrode active material layer may include a positive electrode conductive material and a positive electrode binder in addition to the above-described positive electrode active material.

The positive electrode conductive material is used to impart conductivity to the electrode, and carbon black, graphite, carbon fibers, carbon nanotubes, metal powders, conductive metal oxides, organic conductive materials, or the like may be used, and examples of commercially available conductive materials include acetylene black-based products (Chevron Chemical Company), Gulf Oil Company products, Ketjen black, EC-based products(Armak Company), Vulcan XC-72 (Cabot Company), Super P (MMM Carbon) and the like. Among those listed above, carbon nanotubes, carbon nanofibers, and carbon black are preferable as the conductive material of the present invention, and carbon nanotubes are the most preferable. Since the conductive network of carbon nanotubes can reduce a lifting phenomenon of a binder during the process of drying a positive electrode slurry, carbon nanotubes are the most preferable as the conductive material included in the positive electrode of the present invention.

The carbon nanotubes may have a BET specific surface area of 100 m²/g to 1000 m²/g, 150 m²/g to 800 m²/g, 150 m²/g to 500 m²/g, 150 m²/g to 300 m²/g or 150 m²/g to 200 m²/g.

The positive electrode conductive material may be included in an amount of 0.1 to 30 wt%, specifically 0.1 to 10 wt%, and more specifically 0.5 to 5wt% in the positive electrode active material layer.

As the positive electrode binder, a typically used binder polymer may be used without limitation. For example, various binder polymers such as polyvinylidene fluoride-hexafluoropropylene (PVDF-co-HFP), polyvinylidene fluoride (PVDF), polyacrylonitrile, polymethyl methacrylate, styrene-butadiene rubber (SBR), carboxyl methyl cellulose (CMC), and the like may be used.

The positive electrode binder may be included in an amount of 0.1 to 30 wt%, specifically 0.1 to 10 wt%, and more specifically 0.5 to 5 wt% in the positive electrode active material layer.

### Separator

In an embodiment of the present invention, as the separator, any separator that is a porous substrate used as a separator in a typical lithium secondary battery may be used, and for example, a polyolefin-based porous membrane or a non-woven fabric may be used, but the present invention is not limited thereto. Particularly, a separator that exhibits low resistance to the migration of electrolyte ions and has an excellent electrolyte impregnation ability is preferred.

The polyolefin-based porous membrane may be, for example, a membrane formed of one or a mixture of polyolefin-based polymers such as polyethylene such as high-density polyethylene, linear low-density polyethylene, low-density polyethylene, and ultra-high-molecular-weight polyethylene, polypropylene, polybutylene, polypentene, and the like.

The non-woven fabric may be, for example, a non-woven fabric formed of one or a mixture of polyethylene terephthalate, polybutylene terephthalate, polyester, polyacetal, polyamide, polycarbonate, polyimide, polyether ether ketone, polyethersulfone, polyphenylene oxide, polyphenylene sulfide, polyethylene naphthalene, and the like in addition to the polyolefin-based non-woven fabric. The structure of the non-woven fabric may be a melt-blown non-woven fabric or spunbond non-woven fabric composed of long fibers.

Although the thickness of the porous substrate is not particularly limited, the thickness may be 5 to 50 µm. Also, although the pore size and porosity of the porous substrate are not particularly limited, the pore size and porosity may be 0.01 to 50 µm and 10 to 95%, respectively.

Meanwhile, in order to enhance the mechanical strength of a separator composed of the porous substrate and suppress a short circuit between a positive electrode and a negative electrode, a porous coating layer including inorganic particles and a binder polymer may be further included on at least one surface of the porous substrate.

The lithium secondary battery of the present invention may be manufactured by interposing a separator between a positive electrode and a negative electrode to form an electrode assembly, placing the electrode assembly in a cylindrical battery case or a prismatic battery case, and then injecting an electrolyte thereinto. Alternatively, the lithium secondary battery may be manufactured by stacking the electrode assembly, impregnating the stacked electrode assembly with an electrolyte, placing the resultant in a battery case, and sealing the battery case.

As the battery case, a battery case typically used in the art may be used, and there is no limitation on appearance according to the application of a battery. For example, the battery case may have the appearance of a can made into a cylindrical form, a prismatic form, a pouch form, or a coin form.

Since the lithium secondary battery according to the present invention stably exhibits excellent resistance characteristics, discharge capacity, output characteristics, and an excellent capacity retention rate, it is useful in the fields of portable devices such as mobile phones, laptop computers, digital cameras, and the like, energy storage systems (ESSs), and electric vehicles such as hybrid electric vehicles (HEVs) and the like.

Hereinafter, examples according to the present invention will be described. However, the following examples are intended to promote understanding of the present invention, and the scope of the present invention is not limited to the following examples.

### <Example 1>

### Preparation of CMC-Li salt

A CMC-Na salt was added to a mixed solution (85:15, v/v) of ethanol and HCl, allowed to react while stirring at 35 °C for 2 hours, and then sufficiently washed with a mixed solution (85:15, v/v)of ethanol and distilled water to prepare H-CMC. The H-CMC was added to a mixed solution (90:10, v/v) of ethanol and distilled water, in which 7 wt% LiOH was dissolved, and allowed to react while stirring at 50 °C for 2 hours. After the reaction was terminated, the resultant was neutralized (pH 7) with acetic acid and then sufficiently washed with a mixed solution (85:15, v/v) of ethanol and distilled water to prepare a CMC-Li salt. In this case, the CMC-Li salt had a degree of substitution of a hydroxy group (-OH) with a lithium carboxymethyl group (-CH₂COOLi) of 1.0, a weight-average molecular weight (Mw) of 700,000, a viscosity of 2,200 cps, and a solubility of 1.3.

### Manufacture of negative electrode

The prepared CMC-Li salt, SBR having a particle diameter of 200 nm as an aqueous binder, and natural graphite as a negative electrode active material were mixed in a weight ratio of 1:1:98 (CMC-Li salt:SBR:natural graphite), and water was added as a solvent to prepare a negative electrode slurry. The negative electrode slurry was applied onto a copper current collector so that a loading amount was 10 mg/cm², and then dried in a vacuum oven set at 120 °C for 2 hours or more to manufacture a negative electrode.

### Manufacture of secondary battery

The manufactured negative electrode was used as a negative electrode, and a positive electrode slurry was applied onto an aluminum foil and dried in a vacuum oven set at 120 °C for 2 hours or more to manufacture a positive electrode. In this case, the positive electrode slurry was prepared by dispersing 96.7 parts by weight of Li[Ni_{0.6}Mn_{0.2}Co_{0.2}]O₂, 1.3 parts by weight of graphite acting as a conductive material, and 2.0 parts by weight of polyvinylidene fluoride (PVDF) acting as a binder in an NMP solvent. An electrolyte, in which 1 M LiPF₆ was dissolved in an organic solvent in which diethyl carbonate (DEC), ethylene carbonate (EC), and ethyl methyl carbonate (EMC) were mixed in a volume ratio of 30 vol%, 20 vol%, and 50 vol%, was used to manufacture a lithium secondary battery.

### <Examples 2 to 5>

A CMC-Li salt was prepared from a CMC-Na salt in the same manner as in Example 1, except that the degree of substitution of a hydroxy group (-OH) with a lithium carboxymethyl group (-CH₂COOLi), weight-average molecular weight (Mw), and solubility of the CMC-Li salt were changed as shown in Table 1.

Afterward, a negative electrode and a lithium secondary battery, which includes the CMC-Li salt, were manufactured in the same manner as in Example 1.

### <Examples 6 to 17>

A CMC-Li salt was prepared in the same manner as in Example 1. The degree of substitution of a hydroxy group (-OH) with a lithium carboxymethyl group (-CH2COOLi), molecular weight (Mw), and solubility of the prepared CMC-Li salt were the same as those in Example 1.

Afterward, a negative electrode and a lithium secondary battery, which includes the CMC-Li salt, were manufactured in the same manner as in Example 1, except that the composition of an organic solvent of an electrolyte was changed as shown in Table 1.

### <Examples 18 to 23>

A CMC-Li salt was prepared from a CMC-Na salt in the same manner as in Example 1, except that the degree of substitution of a hydroxy group (-OH) with a lithium carboxymethyl group (-CH₂COOLi), weight-average molecular weight (Mw), and solubility of the CMC-Li salt were changed as shown in Table 1.

Afterward, a negative electrode and a lithium secondary battery, which includes the CMC-Li salt, were manufactured in the same manner as in Example 1.

### <Example 24>

LiOH and mono-chloro acetic acid (MCA) were added to cellulose to prepare a CMC-Li salt having a degree of substitution of a hydroxy group (-OH) with a lithium carboxymethyl group (-CH2COOLi) of 1.0, a molecular weight (Mw) of 700,000, a viscosity of 2,200 cps, and a solubility of 1.3.

Afterward, a negative electrode and a lithium secondary battery, which includes the CMC-Li salt, were manufactured in the same manner as in Example 1.

### <Comparative Example 1>

A CMC-Na salt having a degree of substitution of a hydroxy group (-OH) of 1.0, a molecular weight (Mw) of 700,000, and a solubility of 1.3 was prepared.

A negative electrode and a lithium secondary battery were manufactured in the same manner as in Example 1, except that the CMC-Na salt was used instead of a CMC-Li salt in the manufacture of a negative electrode.

### <Comparative Examples 2 to 4>

A negative electrode was manufactured in the same manner as in Comparative Example 1 using the same CMC-Na salt as in Comparative Example 1. Afterward, a lithium secondary battery was manufactured in the same manner as in Comparative Example 1, except that the composition of an organic solvent of an electrolyte was changed as shown in Table 1.

### <Comparative Examples 5 to 7>

A CMC-Li salt was prepared in the same manner as in Example 1. The degree of substitution of a hydroxy group (-OH) with a lithium carboxymethyl group (-CH2COOLi), molecular weight (Mw), and solubility of the prepared CMC-Li salt were the same as those in

### Example 1.

Afterward, a negative electrode and a lithium secondary battery, which includes the CMC-Li salt, were manufactured in the same manner as in Example 1, except that the composition of an organic solvent of an electrolyte was changed as shown in Table 1.

**[Table 1]**

| | Negative electrode | | | | Organic solvent of electrolyte (vol%) | | | |
|---|---|---|---|---|---|---|---|---|
| | Thickener | Degree of substitution of -OH group | Molecular weight | Solubility | Diethyl carbonate (DEC) | Ethylene carbonate (EC) | Dimethyl carbonate (DMC) | Ethyl methyl carbonate (EMC) |
| Example 1 | CMC-Li | 1.0 | 700,000 | 1.3 | 30 | 20 | 0 | 50 |
| Example 2 | CMC-Li | 0.8 | 500,000 | 1.2 | 30 | 20 | 0 | 50 |
| Example 3 | CMC-Li | 1.2 | 1,200,000 | 1.5 | 30 | 20 | 0 | 50 |
| Example 4 | CMC-Li | 1.0 | 800,000 | 1.3 | 30 | 20 | 0 | 50 |
| Example 5 | CMC-Li | 1.0 | 900,000 | 1.4 | 30 | 20 | 0 | 50 |
| Example 6 | CMC-Li | 1.0 | 700,000 | 1.3 | 80 | 10 | 10 | 0 |
| Example 7 | CMC-Li | 1.0 | 700,000 | 1.3 | 80 | 10 | 0 | 10 |
| Example 8 | CMC-Li | 1.0 | 700,000 | 1.3 | 80 | 0 | 10 | 10 |
| Example 9 | CMC-Li | 1.0 | 700,000 | 1.3 | 60 | 20 | 20 | 0 |
| Example 10 | CMC-Li | 1.0 | 700,000 | 1.3 | 60 | 20 | 0 | 20 |
| Example 11 | CMC-Li | 1.0 | 700,000 | 1.3 | 60 | 0 | 20 | 20 |
| Example 12 | CMC-Li | 1.0 | 700,000 | 1.3 | 40 | 30 | 30 | 0 |
| Example 13 | CMC-Li | 1.0 | 700,000 | 1.3 | 40 | 30 | 0 | 30 |
| Example 14 | CMC-Li | 1.0 | 700,000 | 1.3 | 40 | 0 | 30 | 30 |
| Example 15 | CMC-Li | 1.0 | 700,000 | 1.3 | 10 | 30 | 0 | 60 |
| Example 16 | CMC-Li | 1.0 | 700,000 | 1.3 | 10 | 30 | 30 | 30 |
| Example 17 | CMC-Li | 1.0 | 700,000 | 1.3 | 100 | 0 | 0 | 0 |
| Example 18 | CMC-Li | 0.6 | 700,000 | 1.3 | 30 | 20 | 0 | 50 |
| Example 19 | CMC-Li | 1.4 | 700,000 | 1.3 | 30 | 20 | 0 | 50 |
| Example 20 | CMC-Li | 1.0 | 2,000,000 | 1.3 | 30 | 20 | 0 | 50 |
| Example 21 | CMC-Li | 1.0 | 350,000 | 1.3 | 30 | 20 | 0 | 50 |
| Example 22 | CMC-Li | 1.0 | 700,000 | 1.8 | 30 | 20 | 0 | 50 |
| Example 23 | CMC-Li | 1.0 | 700,000 | 0.9 | 30 | 20 | 0 | 50 |
| Example 24 | CMC-Li | 1.0 | 700,000 | 1.3 | 30 | 20 | 0 | 50 |
| Comparative Example 1 | CMC-Na | 1.0 | 700,000 | 1.3 | 30 | 20 | 0 | 50 |
| Comparative Example 2 | CMC-Na | 1.0 | 700,000 | 1.3 | 0 | 50 | 50 | 0 |
| Comparative Example 3 | CMC-Na | 1.0 | 700,000 | 1.3 | 0 | 50 | 0 | 50 |
| Comparative Example 4 | CMC-Na | 1.0 | 700,000 | 1.3 | 20 | 53.33 | 0 | 26.67 |
| Comparative Example 5 | CMC-Li | 1.0 | 700,000 | 1.3 | 0 | 50 | 50 | 0 |
| Comparative Example 6 | CMC-Li | 1.0 | 700,000 | 1.3 | 0 | 50 | 0 | 50 |
| Comparative Example 7 | CMC-Li | 1.0 | 700,000 | 1.3 | 0 | 0 | 50 | 50 |

### Experimental Example 1: Measurement of number of undissolved materials of CMC-Li salt and CMC-Na salt

The CMC-Li salt of Example 1 was added to deionized water at a concentration of 1 wt% and mixed/stirred at 10 rpm for 10 minutes. The resulting CMC-Li salt solution was applied to a thickness of 200 µm onto a glass plate, and then the number of visually observable microgels (undissolved materials) having a diameter of 200 µm or less in a unit area (5 cm×5 cm) was measured.

For Examples 2 to 24 and Comparative Examples 1 to 7, the number of microgels was measured in the same manner as described above, and results thereof are shown in Table 2.

### Experimental Example 2: Evaluation of adhesion

Each negative electrode manufactured in Examples 1 to 24 and Comparative Examples 1 to 7 was cut to a predetermined size (20 mm × 150 mm).

The cut negative electrode was attached in a longitudinal direction to a slide glass with a width of 25 mm and a length of 75 mm using double-sided adhesive tape so that the negative electrode active material layer of the cut negative electrode faced the slide glass. In other words, the slide glass was attached to an area corresponding to half of the longitudinal direction of the negative electrode. Then, rubbing was performed 10 times using a roller so that the double-sided adhesive tape was uniformly attached, thereby preparing an evaluation sample.

Next, the slide glass part of the evaluation sample was fixed to the sample stage of a universal testing machine (UTM; LS5, AMETEK), and the negative electrode half to which the slide glass was not attached was connected to the load cell of the UTM. The load applied to the load cell was measured while moving the load cell up to 50 mm by applying a load at 90° and a speed of 100 mm/min. In this case, the average value of the load measured in the section of 20 mm to 40 mm during the driving section was measured. This process was repeated a total of 5 times, and an average value thereof was determined as the negative electrode adhesion (gf/20 mm) of each sample.

### Experimental Example 3: Evaluation of initial performance

Each secondary battery manufactured in Examples 1 to 24 and Comparative Examples 1 to 7 was subjected to formation at a current of 200 mA(0.1 C rate), stored at 60 °C for a day, and then gas in the battery was removed(degassing process). Afterward, charging at 0.33 C-rate (0.33 C constant current charging, 4.25 V constant voltage charging, and 0.005 C cut off) was performed, discharging at 0.33 C-rate (0.33C constant current discharging and 3.0 V cut off) was performed, and discharge capacity and negative electrode efficiency(coulombic efficiency) were measured. Discharge capacity was calculated based on the weight of the negative electrode active material, and results thereof are shown in Table 2 below.

### Experimental Example 4: Evaluation of lifespan characteristics according to long-term cycling

Each secondary battery manufactured in Examples 1 to 24 and Comparative Examples 1 to 7 was subjected to formation at a current of 200 mA(0.1 C rate), stored at 60 °C for a day, and then degassed (degassing process). Afterward, a process of charging at 0.33 C-rate (0.33 C constant current charging, 4.25 V constant voltage charging, and 0.005 C cut off) and discharging at 0.33 C-rate (0.33C constant current discharging and 3.0 V cut off) was repeated 300 times, and the resulting discharge capacity was substituted into the following Equation (1) to calculate a capacity retention rate. Results thereof are shown in the following Table 2. 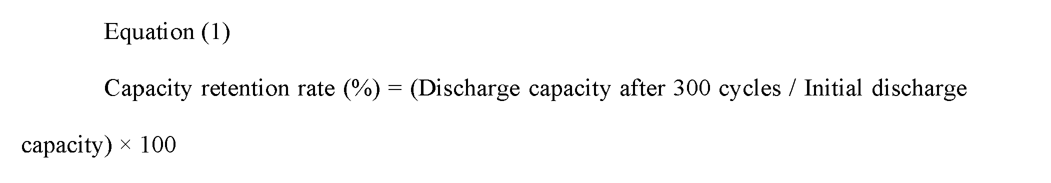 Capacity retention rate (%) = (Discharge capacity after 300 cycles / Initial discharge capacity) × 100 Equation (1)

**[Table 2]**

| | Number of microgels | Adhesion (gf/15mm) | Initial performance | | Capacity retention rate (300cycles) |
|---|---|---|---|---|---|
| | | | Discharge capacity (mAh/g) | Efficiency (%) | |
| Example 1 | 35 | 25 | 354 | 93.5 | 94.1 |
| Example 2 | 26 | 27 | 355 | 93.3 | 93.8 |
| Example 3 | 57 | 22 | 352 | 94.5 | 94.0 |
| Example 4 | 37 | 27 | 354 | 94.2 | 93.9 |
| Example 5 | 39 | 26 | 354 | 94.3 | 93.7 |
| Example 6 | 35 | 25 | 355 | 93.8 | 95.2 |
| Example 7 | 35 | 25 | 353 | 93.1 | 95.1 |
| Example 8 | 35 | 25 | 354 | 93.6 | 94.9 |
| Example 9 | 35 | 25 | 355 | 93.7 | 94.9 |
| Example 10 | 35 | 25 | 353 | 93.5 | 94.1 |
| Example 11 | 35 | 25 | 354 | 93.6 | 94.5 |
| Example 12 | 35 | 25 | 355 | 93.6 | 95.1 |
| Example 13 | 35 | 25 | 351 | 93.3 | 94.3 |
| Example 14 | 35 | 25 | 354 | 93.6 | 94.9 |
| Example 15 | 35 | 25 | 353 | 93.4 | 93.5 |
| Example 16 | 35 | 25 | 354 | 93.6 | 93.6 |
| Example 17 | 35 | 25 | 352 | 93.1 | 93.5 |
| Example 18 | 120 | 17 | 349 | 92.6 | 91.5 |
| Example 19 | 90 | 11 | 349 | 92.8 | 92.6 |
| Example 20 | 320 | 24 | 350 | 93.0 | 92.1 |
| Example 21 | 76 | 12 | 349 | 93.1 | 91.6 |
| Example 22 | 240 | 25 | 349 | 93.1 | 93.1 |
| Example 23 | 25 | 24 | 349 | 93.2 | 92.9 |
| Example 24 | 90 | 13 | 349 | 92.2 | 92.5 |
| Comparative Example 1 | 250 | 12 | 347 | 91.3 | 91.1 |
| Comparative Example 2 | 250 | 12 | 345 | 92.2 | 90.1 |
| Comparative Example 3 | 250 | 12 | 345 | 91.8 | 90 |
| Comparative Example 4 | 250 | 12 | 346 | 92.1 | 90.2 |
| Comparative Example 5 | 35 | 24 | 351 | 92.8 | 90.1 |
| Comparative Example 6 | 35 | 24 | 349 | 92.3 | 91.5 |
| Comparative Example 7 | 35 | 25 | 351 | 92.5 | 92.1 |

Referring to Tables 1 and 2, the CMC-Li salts of Examples 1 to 19, 21, 23, and 24 exhibited a significantly smaller number of microgels compared to the CMC-Na salts of Comparative Examples 1 to 4. Therefore, the negative electrode using a CMC-Li salt as a thickener is expected to suppress the generation of a pinhole and thus prevent battery characteristics from being degraded due to the pinhole as compared to the negative electrode using a CMC-Na salt as a thickener.

In addition, the lithium secondary batteries according to the examples (Examples 1 to 24) of the present invention were excellent in both initial performance and capacity retention rate after 300 cycles compared to the lithium secondary batteries according to the comparative examples (Comparative Examples 1 to 4) using a CMC-Na salt as a thickener of a negative electrode. This is considered to be due to the fact that the CMC-Li salt minimizes the consumption of a lithium salt of an electrolyte and an organic solvent required in formation of an SEI layer in a negative electrode.

Furthermore, the lithium secondary batteries of Examples 1 to 24 including diethyl carbonate (DEC) as an organic solvent of an electrolyte exhibited excellent initial performance and an excellent capacity retention rate compared to the lithium secondary batteries of Comparative Examples 5 to 7 not including DEC as an organic solvent of an electrolyte. Therefore, it can be seen that the inclusion of DEC as an organic solvent of an electrolyte is favorable for doubling the effect of the present invention.

Meanwhile, Examples 18 to 23, in which the degree of substitution of the CMC-Li salt is outside the range of 0.7 to 1.3, the weight-average molecular weight (Mw) of the CMC-Li salt is outside the range of 400,000 to 1,500,000, or the solubility of the CMC-Li salt is outside the range of 1.0 to 1.7, had a larger number of microgels or were inferior in terms of the initial performance or capacity retention rate of the battery compared to Examples 1 to 17. Therefore, in the present invention, it seems to be preferable that the CMC-Li salt has a degree of substitution of 0.7 to 1.3, a weight-average molecular weight of 400,000 to 1,500,000, and a solubility of 1.0 to 1.7.

In addition, the CMC-Li salt of Example 24 was observed to have a larger number of microgels than the CMC-Li salts of Examples 1 to 17, and the negative electrode of Example 24 was confirmed to have lower adhesion than the negative electrodes of Examples 1 to 17. Therefore, it is considered that it is more preferable to select a CMC-Li salt prepared by a multi-step process as the CMC-Li salt of the present invention.

## Claims

1. A lithium secondary battery comprising: a positive electrode; a negative electrode; a separator, and an electrolyte,
wherein the negative electrode includes a negative electrode current collector and a negative electrode active material layer formed on at least one surface of the negative electrode current collector,
the negative electrode active material layer includes a negative electrode active material, an aqueous binder, and a lithium carboxymethyl cellulose salt (CMC-Li salt),
the electrolyte includes a lithium salt and an organic solvent, and
the organic solvent includes diethyl carbonate,
**characterised in that** the CMC-Li salt has 100 or less microgels per unit area of 5 cm×5 cm of a thin film coated with a 1 wt% aqueous solution to a thickness of 200 µm.

2. The lithium secondary battery of claim 1, wherein the organic solvent includes diethyl carbonate in an amount of 10 vol% or more based on a total volume of the organic solvent.

3. The lithium secondary battery of claim 1, wherein the organic solvent further includes one or two or more organic solvents selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate (VC), fluoroethylene carbonate (FEC), dimethyl carbonate (DMC), dipropyl carbonate, ethyl methyl carbonate (EMC), methyl propyl carbonate, ethyl propyl carbonate, dimethyl ether, diethyl ether, dipropyl ether, methyl ethyl ether, methyl propyl ether, ethyl propyl ether, methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone.

4. The lithium secondary battery of claim 1, wherein the organic solvent further includes one or two or more selected from the group consisting of ethylene carbonate (EC), ethyl methyl carbonate (EMC), and dimethyl carbonate (DMC).

5. The lithium secondary battery of claim 1, wherein the microgel has a diameter of 200 µm or less.

6. The lithium secondary battery of claim 1, wherein the CMC-Li salt has a degree of substitution of a hydroxy group (-OH) with a lithium carboxymethyl group (-CH₂COOLi) of 0.7 to 1.3.

7. The lithium secondary battery of claim 1, wherein the CMC-Li salt has a weight-average molecular weight Mw of 400,000 to 1,500,000 and the weight-average molecular weight is obtained by converting a value measured using gel permeation chromatography (GPC), and standard polystyrene of an Agilent system is used to make a calibration curve with the following conditions: analyser: Agilent^{™} 1200 GPC; column: two connected PL mixed-B columns; column temperature: 40 °C; eluent: tetrahydrofuran; flow rate: 1.0 mL/min; concentration ~1mg/mL - 100 µL injection.

8. The lithium secondary battery of claim 1, wherein the CMC-Li salt has a weight-based solubility of 1.0 to 1.7 as measured at 23 °C, the solubility being a percentage of the weight of the CMC-Li salt relative to the total weight of deionized water and the CMC-Li salt.

9. The lithium secondary battery of claim 1, wherein the CMC-Li salt is included in an amount of 10 wt% or less based on a total weight of the negative electrode active material layer.

10. The lithium secondary battery of claim 1, wherein the aqueous binder is styrene-butadiene rubber (SBR).

11. The lithium secondary battery of claim 10, wherein the SBR has a particle diameter of 90 nm to 500 nm, and the particle diameter being measured by the laser diffraction method.

12. The lithium secondary battery of claim 1, wherein the negative electrode active material includes one or more carbon-based materials selected from the group consisting of graphite-based carbon, coke-based carbon, and hard carbon.

13. The lithium secondary battery of claim 12, wherein the negative electrode active material further includes one or more silicon-based materials selected from the group consisting of Si, SiOx where 0<x≤2, and an Si-Y alloy where Y is an element selected from the group consisting of an alkali metal, an alkaline earth metal, a Group 13 element, a Group 14 element, a transition metal, a rare earth element, and a combination thereof and is not Si.

14. The lithium secondary battery of claim 13, wherein the silicon-based material is included in an amount of 0.1 to 10 parts by weight based on a total weight of the negative electrode active material.

## Patentansprüche

1. Lithium-Sekundärbatterie, umfassend eine positive Elektrode; eine negative Elektrode; einen Separator und einen Elektrolyten,
wobei die negative Elektrode einen Negativelektroden-Stromableiter und eine Negativelektroden-Aktivmaterialschicht umfasst, die auf mindestens einer Oberfläche des Negativelektroden-Stromableiters ausgebildet ist,
die Negativelektroden-Aktivmaterialschicht ein Negativelektroden-Aktivmaterial, ein wässriges Bindemittel und ein Lithium-Carboxymethylcellulosesalz (CMC-Li-Salz) enthält,
der Elektrolyt ein Lithiumsalz und ein organisches Lösungsmittel enthält, und
das organische Lösungsmittel Diethylcarbonat enthält,
**dadurch gekennzeichnet, dass** das CMC-Li-Salz 100 oder weniger Mikrogele pro Flächeneinheit von 5 cm×5 cm eines dünnen Films umfasst, der mit einer 1 Gew.-%-igen wässrigen Lösung bis zu einer Dicke von 200 µm aufgetragen ist.

2. Lithium-Sekundärbatterie nach Anspruch 1, wobei das organische Lösungsmittel Diethylcarbonat in einer Menge von 10 Vol.-% oder mehr, bezogen auf ein Gesamtvolumen des organischen Lösungsmittels, enthält.

3. Lithium-Sekundärbatterie nach Anspruch 1, wobei das organische Lösungsmittel ferner ein oder zwei oder mehr organische Lösungsmittel enthält, ausgewählt aus der Gruppe bestehend aus Ethylencarbonat (EC), Propylencarbonat (PC), 1,2-Butylencarbonat, 2,3-Butylencarbonat, 1,2-Pentylencarbonat, 2,3-Pentylencarbonat, Vinylencarbonat (VC), Fluorethylencarbonat (FEC), Dimethylcarbonat (DMC), Dipropylcarbonat, Ethylmethylcarbonat (EMC), Methylpropylcarbonat, Ethylpropylcarbonat, Dimethylether, Diethylether, Dipropylether, Methylethylether, Methylpropylether, Ethylpropylether, Methylacetat, Ethylacetat, Propylacetat, Methylpropionat, Ethylpropionat, Propylpropionat, Butylpropionat, γ-Butyrolacton, γ-Valerolacton, γ-Caprolacton, σ-Valerolacton und ε-Caprolacton.

4. Lithium-Sekundärbatterie nach Anspruch 1, wobei das organische Lösungsmittel ferner eines oder zwei oder mehr enthält, ausgewählt aus der Gruppe bestehend aus Ethylencarbonat (EC), Ethylmethylcarbonat (EMC) und Dimethylcarbonat (DMC).

5. Lithium-Sekundärbatterie nach Anspruch 1, wobei das Mikrogel einen Durchmesser von 200 µm oder weniger aufweist.

6. Lithium-Sekundärbatterie nach Anspruch 1, wobei das CMC-Li-Salz einen Substitutionsgrad einer Hydroxygruppe (-OH) durch eine Lithium-Carboxymethylgruppe (-CH₂COOLi) von 0,7 bis 1,3 aufweist.

7. Lithium-Sekundärbatterie nach Anspruch 1, wobei das CMC-Li-Salz ein gewichtsmittleres Molekulargewicht Mw von 400 000 bis 1 500 000 aufweist und das gewichtsmittlere Molekulargewicht durch Umrechnen eines unter Verwendung von Gelpermeationschromatographie (GPC) gemessenen Werts erhalten wird, und Standardpolystyrol eines Agilent-Systems verwendet wird, um eine Kalibrierkurve unter den folgenden Bedingungen zu erstellen: Analysator: Agilent^{TM} 1200 GPC; Säule: zwei miteinander verbundene PL-mixed-B-Säulen; Säulentemperatur: 40 °C; Eluent: Tetrahydrofuran; Durchflussrate: 1,0 mL/min; Konzentration ~1 mg/mL - 100 µL Injektion.

8. Lithium-Sekundärbatterie nach Anspruch 1, wobei das CMC-Li-Salz eine gewichtsbasierte Löslichkeit von 1,0 bis 1,7, gemessen bei 23 °C, aufweist, wobei die Löslichkeit den prozentualen Anteil des Gewichts des CMC-Li-Salzes am Gesamtgewicht aus entionisiertem Wasser und dem CMC-Li-Salz darstellt.

9. Lithium-Sekundärbatterie nach Anspruch 1, wobei das CMC-Li-Salz in einer Menge von 10 Gew.-% oder weniger, bezogen auf ein Gesamtgewicht der Negativelektroden-Aktivmaterialschicht, enthalten ist.

10. Lithium-Sekundärbatterie nach Anspruch 1, wobei es sich bei dem wässrigen Bindemittel um Styrol-Butadien-Kautschuk (SBR) handelt.

11. Lithium-Sekundärbatterie nach Anspruch 10, wobei der SBR einen Partikeldurchmesser von 90 nm bis 500 nm aufweist und der Partikeldurchmesser mittels Laserbeugungsverfahren gemessen wird.

12. Lithium-Sekundärbatterie nach Anspruch 1, wobei das Negativelektroden-Aktivmaterial ein oder mehrere Materialien auf Kohlenstoffbasis enthält, ausgewählt aus der Gruppe bestehend aus Kohlenstoff auf Graphitbasis, Kohlenstoff auf Koksbasis und Hartkohlenstoff.

13. Lithium-Sekundärbatterie nach Anspruch 12, wobei das Negativelektroden-Aktivmaterial ferner ein oder mehrere Materialien auf Siliciumbasis enthält, ausgewählt aus der Gruppe bestehend aus Si, SiOₓ, wobei 0<x≤2, und einer Si-Y-Legierung, wobei Y ein Element ist, ausgewählt aus der Gruppe bestehend aus einem Alkalimetall, einem Erdalkalimetall, einem Element der Gruppe 13, einem Element der Gruppe 14, einem Übergangsmetall, einem Seltenerd-Element und einer Kombination davon, und nicht Si ist.

14. Lithium-Sekundärbatterie nach Anspruch 13, wobei das Material auf Siliciumbasis in einer Menge von 0,1 bis 10 Gewichtsteilen, bezogen auf ein Gesamtgewicht des Negativelektroden-Aktivmaterials, enthalten ist.

## Revendications

1. Batterie secondaire au lithium comprenant : une électrode positive; une électrode négative ; un séparateur, et un électrolyte,
dans laquelle l'électrode négative comprend un collecteur de courant d'électrode négative et une couche de matériau actif d'électrode négative formée sur au moins une surface du collecteur de courant d'électrode négative,
la couche de matériau actif d'électrode négative comprend un matériau actif d'électrode négative, un liant aqueux, et un sel de carboxyméthylcellulose de lithium (sel de CMC-Li),
l'électrolyte comprend un sel de lithium et un solvant organique, et
le solvant organique comprend du carbonate de diéthyle,
**caractérisée en ce que** le sel de CMC-Li présente 100 microgels ou moins par unité de surface de 5 cm×5 cm d'un film mince revêtu d'une solution aqueuse à 1 % en poids jusqu'à une épaisseur de 200 µm.

2. Batterie secondaire au lithium selon la revendication 1, dans laquelle le solvant organique comprend du carbonate de diéthyle en une quantité de 10 % en volume ou plus sur la base d'un volume total du solvant organique.

3. Batterie secondaire au lithium selon la revendication 1, dans laquelle le solvant organique comprend en outre un ou deux solvants organiques ou plus choisis dans le groupe constitué par le carbonate d'éthylène (EC), le carbonate de propylène (PC), le carbonate de 1,2-butylène, le carbonate de 2,3-butylène, le carbonate de 1,2-pentylène, le carbonate de 2,3-pentylène, le carbonate de vinylène (VC), le carbonate de fluoroéthylène (FEC), le carbonate de diméthyle (DMC), le carbonate de dipropyle, le carbonate d'éthylméthyle (EMC), le carbonate de méthylpropyle, le carbonate d'éthylpropyle, le diméthyléther, le diéthyléther, le dipropyléther, le méthyléthyléther, le méthylpropyléther, l'éthylpropyléther, l'acétate de méthyle, l'acétate d'éthyle, l'acétate de propyle, le propionate de méthyle, le propionate d'éthyle, le propionate de propyle, le propionate de butyle, la γ-butyrolactone, la γ-valérolactone, la γ-caprolactone, la σ-valérolactone, et l'ε-caprolactone.

4. Batterie secondaire au lithium selon la revendication 1, dans laquelle le solvant organique comprend en outre un ou deux ou plus choisis dans le groupe constitué par le carbonate d'éthylène (EC), le carbonate d'éthylméthyle (EMC), et le carbonate de diméthyle (DMC).

5. Batterie secondaire au lithium selon la revendication 1, dans laquelle le microgel a un diamètre de 200 µm ou moins.

6. Batterie secondaire au lithium selon la revendication 1, dans laquelle le sel de CMC-Li a un degré de substitution d'un groupe hydroxy (-OH) par un groupe carboxyméthyle de lithium (-CH₂COOLi) de 0,7 à 1,3.

7. Batterie secondaire au lithium selon la revendication 1, dans laquelle le sel de CMC-Li a une masse moléculaire moyenne en poids Mw de 400 000 à 1 500 000 et la masse moléculaire moyenne en poids est obtenue en convertissant une valeur mesurée à l'aide d'une chromatographie sur gel perméable (GPC), et du polystyrène étalon d'un système Agilent est utilisé pour établir une courbe d'étalonnage avec les conditions suivantes : analyseur : Agilent^{TM} 1200 GPC ; colonne : deux colonnes PL mixed-B connectées ; température de colonne : 40 °C ; éluant : tétrahydrofurane ; débit : 1,0 mL/min ; concentration ~1 mg/mL - injection de 100 µL.

8. Batterie secondaire au lithium selon la revendication 1, dans laquelle le sel de CMC-Li a une solubilité basée sur le poids de 1,0 à 1,7 telle que mesurée à 23 °C, la solubilité étant un pourcentage du poids du sel de CMC-Li par rapport au poids total d'eau déionisée et du sel de CMC-Li.

9. Batterie secondaire au lithium selon la revendication 1, dans laquelle le sel de CMC-Li est inclus en une quantité de 10 % en poids ou moins sur la base d'un poids total de la couche de matériau actif d'électrode négative.

10. Batterie secondaire au lithium selon la revendication 1, dans laquelle le liant aqueux est un caoutchouc styrène-butadiène (SBR).

11. Batterie secondaire au lithium selon la revendication 10, dans laquelle le SBR a un diamètre de particule de 90 nm à 500 nm, et le diamètre de particule étant mesuré par la méthode de diffraction laser.

12. Batterie secondaire au lithium selon la revendication 1, dans laquelle le matériau actif d'électrode négative comprend un ou plusieurs matériaux à base de carbone choisis dans le groupe constitué par le carbone à base de graphite, le carbone à base de coke, et le carbone dur.

13. Batterie secondaire au lithium selon la revendication 12, dans laquelle le matériau actif d'électrode négative comprend en outre un ou plusieurs matériaux à base de silicium choisis dans le groupe constitué par Si, SiOₓ où 0<x≤2, et un alliage Si-Y où Y est un élément choisi dans le groupe constitué par un métal alcalin, un métal alcalino-terreux, un élément du groupe 13, un élément du groupe 14, un métal de transition, un élément des terres rares, et une combinaison de ceux-ci et n'est pas Si.

14. Batterie secondaire au lithium selon la revendication 13, dans laquelle le matériau à base de silicium est inclus en une quantité de 0,1 à 10 parties en poids sur la base d'un poids total du matériau actif d'électrode négative.
